# EUROPÄISCHE PATENTANMELDUNG

(11) **EP 2 505 081 A1**
(43) Veröffentlichungstag der Anmeldung: **03.10.2012**
(21) Anmeldenummer: 12157289.5
(22) Anmeldetag: 28.02.2012
(51) Int. Cl.: A23L 2/08, A23L 2/42, A23L 2/50, A23L 2/74, A23L 3/00, A23L 3/30, A23L 3/3463, A23L 3/358, B01F 3/08, B01F 3/20

(54) **Verfahren und Produktionsanlage zum Herstellen eines Getränkeprodukts**

(30) Priorität: 31.03.2011 DE 102011006547
(71) Anmelder: Krones AG, 93073 Neutraubling (DE)
(72) Erfinder: Zacharias, Jörg, 93096 Köferin (DE)
(74) Vertreter: Grünecker, Kinkeldey, Stockmair & Schwanhäusser

(57) **Zusammenfassung**

Die Erfindung umfasst ein Verfahren zum Herstellen eines Getränkeprodukts umfassend ein Mischen von wenigstens zwei Produktströmen, wobei wenigstens einer der wenigstens zwei Produktströme vor dem Mischen ohne Erhitzen sterilisiert wird.

## Beschreibung

Die Erfindung betrifft ein Verfahren und eine Produktionsanlage zum Herstellen eines Getränkeprodukts.

Bei der Getränkeherstellung spielt die Haltbarmachung des hergestellten Getränks eine entscheidende Rolle. Die Haltbarmachung wird üblicherweise durch eine thermische Sterilisation, also durch Erhitzen des Getränks erreicht. Je nach Ausgangsbelastung und nach Anforderungen an das Mindesthaltbarkeitsdatum wird dabei die Verringerung der Anzahl an vermehrungsfähigen Mikroorganismen um einen bestimmten Faktor erreicht.

Häufig werden Getränkeprodukte durch Ausmischen von unterschiedlichen Bestandteilen oder Produktströmen hergestellt. Beispielsweise werden Softdrinks oder karbonisierte Softdrinks üblicherweise durch Ausmischen von Säften aus Konzentraten mit Wasser hergestellt.

Die Mischung der Komponenten erfolgt in Mischtanks, statischen Mischern, auf separaten Füllerkarussells beziehungsweise Predosern oder direkt beim Füllen. Die einzelnen Komponenten und/oder das fertige Produkt werden durch Erhitzen sterilisiert.

Im Standardprozess zur Sterilisation wird eine dampf- oder heißwasserbeheizte ultrahochtemperierte (UHT) Vorrichtung eingesetzt. Charakteristische Temperaturen liegen dabei bei 121 °C, 130 °C oder auch bis 140 °C. Das zur Abtötung der Mikroorganismen benötigte Temperaturprofil wird üblicherweise mittels Temperatursensoren überwacht.

Ein Nachteil der bekannten Herstellungsverfahren besteht jedoch darin, dass für die thermische Wärmebehandlung, also für das Erhitzen, ein hoher Einsatz an Wärmeenergie notwendig ist.

Daher ist es Aufgabe der vorliegenden Erfindung, ein energieeffizienteres Verfahren und eine energieeffizientere Produktionsanlage zum Herstellen eines Getränkeprodukts bereitzustellen.

Die Erfindung stellt ein Verfahren zum Herstellen eines Getränkeprodukts bereit, umfassend ein Mischen von wenigstens zwei Produktströmen, wobei wenigstens einer der wenigstens zwei Produktströme vor dem Mischen ohne Erhitzen sterilisiert wird.

Dadurch, dass wenigstens einer der wenigstens zwei Produktströme ohne Erhitzen oder erhitzungsfrei sterilisiert wird, kann der Energieverbrauch beim Herstellen des Getränkeprodukts reduziert werden.

Bei dem Getränkeprodukt kann es sich beispielsweise um einen Softdrink (SD) oder einen karbonisierten Softdrink (CSD) handeln.

Die wenigstens zwei Produktströme können insbesondere einen Saft- und/oder Sirupstrom, einen Slurrystrom, einen Aromastrom, einen Mineralien- und/oder Salzstrom und/oder einen Wasserstrom umfassen.

Insbesondere der Wasserstrom kann ohne Erhitzen sterilisiert werden.

Als Sterilisation kann hierbei insbesondere eine Reduktion der Anzahl an vermehrungsfähigen Mikroorganismen verstanden werden. Die Reduktion der Anzahl an vermehrungsfähigen Mikroorganismen oder Keimen kann dabei um einen vorherbestimmten Faktor geschehen.

Das Mischen der wenigstens zwei Produktströme kann aseptisch durchgeführt werden. Damit kann eine weitere Sterilisation des gemischten Gesamtstroms vermieden werden, wodurch eine weitere Energieersparnis möglich ist.

Insbesondere können mehr als einer, insbesondere alle Produktströme, ohne Erhitzen oder erhitzungsfrei sterilisiert werden.

Der wenigstens eine Produktstrom, also der erhitzungsfrei oder kaltaseptisch zu sterilisierende Produktstrom, kann mittels eines Membranfilters und/oder mittels chemischer Desinfektionsmittel und/oder mittels elektromagnetischer Strahlung und/oder mittels Ultraschall sterilisiert werden.

Man kann so ein kaltaseptisches Getränkeproduktionsverfahren alternativ zu den gängigen Pasteurisations- und Sterilisationsverfahren in der industriellen Getränkeherstellung erreichen.

Im Falle einer Sterilisation mittels eines Membranfilters, also im Fall einer Sterilfiltration, kann es sich insbesondere um eine Ultrafiltration handeln. Als Ultrafiltration kann ein Filtrationsverfahren bezeichnet werden, bei dem Partikel mit einer Größe, insbesondere einem mittleren Durchmesser, größer als 0,1 µm bis 0,01 µm abgetrennt oder abgeschieden werden. Der Membranfilter kann eine mittlere Porengröße von 0,01 µm bis 0,45 µm, insbesondere von 0,02 µm bis 0,2 µm, insbesondere von 0,01 µm bis 0,1 µm, aufweisen.

Das Membranfiltrationsmodul kann insbesondere einen Hohlfasermembranfilter umfassen. Der Hohlfasermembranfilter kann einige hundert bis einige tausend Hohlfasermembrane umfassen, insbesondere mit einer mittleren Porengröße von 0,2 µm bis 0,45 µm, insbesondere von 0,2 µm bis 0,02 µm, insbesondere von 0,1 µm bis 0,01 µm.

Als chemisches Desinfektionsmittel kann insbesondere Ozon verwendet werden. Ozon zerfällt oder ist leicht beseitigbar, wodurch es im Getränkeprodukt keine kritische Belastung darstellt. Jedoch sind auch andere Desinfektionsmittel, wie beispielsweise Chlordioxid, Wasserstoffperoxid oder Singulett-Sauerstoff möglich. Gegebenenfalls können auch Desinfektionsmittelkombinationen verwendet werden.

Die Sterilisation mittels elektromagnetischer Strahlung kann ionisierende oder nichtionisierende Strahlung umfassen. Als ionisierende Strahlung kann beispielsweise Röntgen-, Gamma- oder Elektronenstrahlung verwendet werden. Als nichtionisierende Strahlung ist beispielsweise ultraviolette Strahlung möglich.

Der wenigstens eine erhitzungsfrei zu sterilisierende Produktstrom kann eine Temperatur zwischen 5 °C und 45 °C, insbesondere zwischen 10 °C und 20 °C, aufweisen.

Der wenigstens eine Produktstrom kann insbesondere ein Kaltwasserstrom sein, also beispielsweise, Frischwasser in Form von Rohwasser oder aufbereitetem Wasser. Mit anderen Worten kann der wenigstens eine Produktstrom Wasser mit einer Temperatur zwischen 5 °C und 45 °C, insbesondere zwischen 10 °C und 20 °C, umfassen oder einem solchen entsprechen.

Der wenigstens eine Produktstrom kann der Hauptproduktstrom oder Hauptstrang sein. Mit anderen Worten kann der Anteil der im wenigstens einen Produktstrom zugeführten Komponente im hergestellten Getränkeprodukt zwischen 50 % und 70 %, insbesondere zwischen 50 % und 90 %, insbesondere zwischen 50 % und 99 % betragen.

Der wenigstens eine Produktstrom kann vor dem Sterilisieren, insbesondere hinsichtlich pH-Wert und/oder Salzgehalt, konditioniert bzw. aufbereitet werden.

Alternativ oder zusätzlich können dem wenigstens einen Produktstrom vor dem Sterilisieren auch Substanzen zur Bildung von Agglomeraten zugegeben werden. Diese können zur gezielten Abscheidung bestimmter Schadstoffe genutzt werden.

Alternativ oder zusätzlich kann auch eine Zugabe von Tracer-Molekülen stattfinden. Wenn diese nach der Sterilisation noch festgestellt werden kann dies als Hinweis für Störungen bei der Sterilisation, beispielsweise für einen Membranbruch, dienen.

Das Verfahren kann außerdem ein Überwachen der Sterilität des wenigstens einen Produktstroms umfassen.

Die Sterilität des wenigstens einen Produktstroms kann mittels eines Sensors, insbesondere eines Onlinesensors, überwacht werden. Dadurch kann die Sicherheit des Herstellungsverfahrens des Getränkeprodukts erhöht werden.

Als Onlinesensor kann insbesondere ein Sensor bezeichnet werden, der die Sterilität des wenigstens einen Produktstroms während der Herstellung des Getränkeprodukts ermöglicht, insbesondere also ohne Produktionsunterbrechung.

Die Sterilität des wenigstens einen Produktstroms kann mit Hilfe des Sensors vor dem Mischen der wenigstens zwei Produktströme überprüft werden. Der Sensor kann insbesondere die Sterilität des erhitzungsfrei sterilisierten Produktstroms überwachen oder überprüfen.

Dem wenigstens einen Produktstrom kann, insbesondere laufend, ein Desinfektionsmittel zugegeben werden und direkt im Produktionsstrom die Konzentrationsabnahme des Desinfektionsmittels ermittelt und ausgewertet werden. Das Desinfektionsmittel kann insbesondere dem erhitzungsfrei sterilisierten Produktstrom zugegeben werden. Mit andern Worten kann erst der Produktstrom ohne Erhitzen sterilisiert werden und dann, insbesondere unabhängig davon, ob der sterilisierte Produktstrom tatsächlich steril oder kontaminiert ist, das Desinfektionsmittel zugegeben und dann direkt im Produktionsstrom die Konzentrationsabnahme des Desinfektionsmittels ermittelt und ausgewertet werden.

Das Desinfektionsmittel wird hierbei also nicht vorrangig zum Desinfizieren des Produktstroms benutzt, sondern um über die Auswertung der Konzentrationsabnahme im Produktstrom herausfinden zu können, ob die Produktionsanlage während des Herstellungsverfahrens ordnungsgemäß arbeitet oder eine Funktionsstörung vorliegt. Bei ordnungsgemäßer Funktion tritt nämlich ein exakt vorherbestimmbarer, relativ geringer Abfall der Konzentration des Desinfektionsmittels auf (auch Halbwertszeit genannt), während im Falle einer Funktionsstörung aufgrund der Kontamination eine weitaus signifikantere Konzentrationsabnahme als Folge der Zerstörung von Mikroorganismen durch das Desinfektionsmittel entsteht, so dass dann ein sofortiger Rückschluss auf eine Funktionsstörung möglich und Gegenmaßnahmen einleitbar sind.

Durch das Verwenden eines derartigen Sensors oder Sterilsensors kann auf einfache Weise auch für einen ohne Erhitzen sterilisierten Produktstrom ein permanenter Sterilitätsnachweis erbracht werden.

Im Falle der Verwendung eines Membranfiltrationsmoduls, insbesondere zur Ultrafiltration, braucht der verwendete Membranentyp nicht resistent gegen das zugegebene Desinfektionsmittel zu sein, da dies erst im Produktstrom stromabwärts des Membranfiltrationsmoduls zugesetzt wird.

Wenn durch den Sensor eine Funktionsstörung festgestellt wird, kann die Produktionsanlage stillgesetzt werden, also das Herstellen des Getränkeprodukts gestoppt werden, oder es kann ein Warnsignal oder eine Warnmeldung an eine Bedienperson ausgegeben werden.

Der mit dem Desinfektionsmittel versetzte Produktstrom kann insbesondere durch eine Verweilzeitstrecke geführt werden, wobei die Desinfektionsmittelkonzentration vor und nach der Verweilzeitstrecke gemessen wird und/oder eine Desinfektionsmittelkonzentrationsdifferenz ermittelt und ausgewertet wird, und insbesondere wobei das Herstellen des Getränkeprodukts entweder bei erbrachtem Sterilitätsnachweis fortgesetzt werden kann oder wegen nicht erbrachtem Sterilitätsnachweis die Zugabekonzentration erhöht werden kann, bis der Sterilitätsnachweis erbringbar ist oder wegen nicht erbringbarem Sterilitätsnachweis abgebrochen wird.

Es kann auch die Sterilität von mehreren, insbesondere von allen, Produktströmen mit je einem Sensor überprüft werden. Jeder der Sensoren kann eines oder mehrere der oben beschriebenen Merkmale aufweisen.

Es können auch mehrere Sensoren für einen Produktstrom vorgesehen sein.

Der Sensor kann auch in Kombination mit weiteren Sensoren eingesetzt werden, beispielsweise Leitfähigkeitsensoren, Trübungssensoren, Farbsensoren und/oder spektralphotometrischen Systemen. So können zum einen redundante Informationen zur Absicherung der Online-Messung herangezogen werden. Zum Anderen können auch unklare Messwerte durch die Kombination der Information eindeutiger und sensitiver ausgewertet werden.

Die Erfindung stellt außerdem eine Produktionsanlage zum Herstellen eines Getränkeprodukts bereit umfassend:
eine Mischvorrichtung zum Mischen von wenigstens zwei Produktströmen, und
eine Sterilisationsvorrichtung zum erhitzungsfreien Sterilisieren wenigstens eines der wenigstens zwei Produktströme.

Dadurch, dass die Sterilisationsvorrichtung ein erhitzungsfreies Sterilisieren wenigstens eines der wenigstens zwei Produktströme ermöglicht, ist eine Energieersparnis verglichen zu einem Sterilisieren durch Erhitzen möglich.

Mit anderen Worten kann die Produktionsanlage derart ausgebildet und/oder konfiguriert sein, dass ein oben genanntes Verfahren zum Herstellen eines Getränkeprodukts darin durchführbar ist.

Die Sterilisationsvorrichtung kann insbesondere wenigstens ein Membranfiltrationsmodul umfassen. Das Membranfiltrationsmodul kann insbesondere eines oder mehrere der oben genannten Merkmale umfassen. Die Sterilisationsvorrichtung kann alternativ oder zusätzlich eine Vorrichtung zum Einbringen eines chemischen Desinfektionsmittels und/oder elektromagnetischer Strahlung und/oder Ultraschall in den wenigstens einen erhitzungsfrei zu sterilisierenden Produktstrom umfassen. Das chemische Desinfektionsmittel und/oder die elektromagnetische Strahlung können insbesondere eines oder mehrere der oben genannten Merkmale umfassen.

Der wenigstens eine Produktstrom, der durch die Sterilisationsvorrichtung erhitzungsfrei sterilisierbar ist, kann insbesondere eines oder mehrere der oben genannten Merkmale umfassen, insbesondere einem Kaltwasserstrom entsprechen.

Die Produktionsanlage kann außerdem eine Konditioniervorrichtung zum Konditionieren des wenigstens einen Produktstroms vor dem Sterilisieren, insbesondere hinsichtlich pH-Wert und/oder Salzgehalt.

Alternativ oder zusätzlich können dem Produktstrom in der Konditioniervorrichtung auch Substanzen zur Bildung von Agglomeraten zugegeben werden. Diese können zur gezielten Abscheidung bestimmter Schadstoffe genutzt werden.

Alternativ oder zusätzlich kann in der Konditioniervorrichtung auch eine Zugabe von Tracer-Molekülen stattfinden. Wenn diese nach der Sterilisation noch festgestellt werden kann dies als Hinweis für Störungen bei der Sterilisation, beispielsweise für einen Membranbruch, dienen.

Die Produktionsanlage kann außerdem einen Sensor zur Überwachung der Sterilität des wenigstens einen Produktstroms umfassen, insbesondere wobei mit dem Sensor permanent eine Konzentrationsabnahme eines dem Produktstrom zugesetzten Desinfektionsmittels messbar und im Hinblick auf Erbringen eines Sterilitätsnachweises auswertbar ist.

Der Sensor kann insbesondere eines oder mehrere der oben genannten Merkmale aufweisen.

Der Sensor kann insbesondere stromabwärts oder nach der Sterilisationsvorrichtung angeordnet sein. Er kann dort inline oder auch im Bypass angeordnet sein. Vorteilhafter ist die inline-Anordnung, also derart, dass der gesamte Produktstrom den Sensor passiert. Im Falle einer Bypass-Anordnung kann ein Teil des Produktstroms abgezweigt werden, beispielsweise mittels einer Bypassleitung, und nur dieser separate Teil des Produktstroms am Sensor vorbeigeführt werden.

Für den wenigstens einen Produktstrom kann bei dem Sensor eine Verweilzeitstrecke vorgesehen sein, und im Bereich des Beginns der Verweilzeitstrecke eine Zugabevorrichtung für das Desinfektionsmittel, insbesondere Ozon, Chlordioxid, Wasserstoffperoxid oder Singulett-Sauerstoff vorgesehen sein und wobei der Sensor einen Desinfektionsmittelendkozentrationssensor stromab mit der Verweilzeitstrecke umfasst.

Die Produktionsanlage kann auch mehrere Sensoren zur Sterilitätsüberwachung umfassen. Insbesondere kann je ein Sensor für mehrere, insbesondere für alle, Produktströme vorgesehen sein. Die Sensoren können insbesondere eines oder mehrere der oben genannten Merkmale aufweisen.

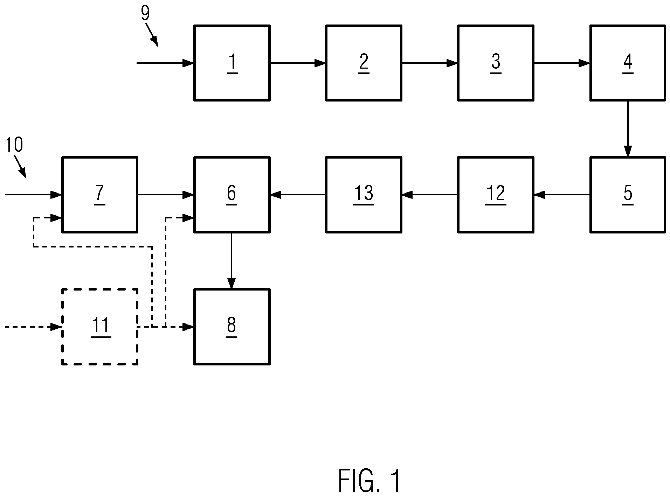

Weitere Merkmale und Vorteile der Erfindung werden nachfolgend anhand der beispielhaften Figur erläutert. Dabei zeigt
- Figur 1: schematisch eine beispielhafte Produktionsanlage zum Herstellen eines Getränkeprodukts.

Getränke, wie beispielsweise Softdrinks oder karbonisierte Softdrinks, werden häufig durch Ausmischen von Säften aus Konzentraten hergestellt. Dem Wasser als Hauptmedium werden dabei weitere Komponenten oder Bestandteile zugemischt. Mögliche zusätzliche Komponenten können dabei Makro- oder Mikrokomponenten unterschiedlicher Mengen beziehungsweise Mengenverhältnisse sein, wie zum Beispiel Konzentrate (Saft, Sirup), Slurry (Faser, Pulpen, Partikel und Fruchtstückchen aller Art), Aromen, Mineralien und/oder Salz, etc.

Figur 1 zeigt schematisch eine beispielhafte Produktionsanlage zum Herstellen eines Getränkeprodukts. Dabei werden zwei beispielhafte Produktströme 9 und 10 in einer Mischvorrichtung 6 gemischt. Bei dem Produktstrom 9 kann es sich insbesondere um einen Wasserstrom handeln. Insbesondere kann das Wasser kalt sein, also eine Temperatur zwischen 5 °C und 45 °C aufweisen.

Der Produktstrom 9 kann der Hauptproduktstrom oder Hauptstrang sein. Mit anderen Worten kann der Anteil der im Produktstrom 9 zugeführten Komponente im hergestellten Getränkeprodukt zwischen 50 % und 70 %, insbesondere zwischen 50 % und 90 %, insbesondere zwischen 50 % und 99 % betragen. Bei dem zweiten Produktstrom 10 kann es sich beispielsweise um einen Konzentratstrom handeln. Mit anderen Worten kann beispielsweise ein Fruchtsaftkonzentrat über den Produktstrom 10 in die Mischvorrichtung 6 eingebracht werden. Das in der Mischvorrichtung 6 durch Mischen der beiden Produktströme hergestellte Getränkeprodukt kann dann in einer Füllvorrichtung 8 in Behälter, beispielsweise in Flaschen, abgefüllt werden.

Das Wasser im Produktstrom 10 kann zunächst in einer Wasserkonditioniervorrichtung 1 behandelt werden. Dabei kann das Wasser hinsichtlich pH-Wert und/oder Salzgehalt konditioniert werden. Der Produktstrom kann dann in eine Sterilisationsvorrichtung 2 eingebracht werden, in der der Produktstrom ohne zu erhitzen sterilisiert wird. Die Sterilisationsvorrichtung 2 kann insbesondere eine Ultrafiltrationsanlage sein, in der der Produktstrom, insbesondere der Wasserstrom, durch Sterilfiltration sterilisiert wird. Dabei werden Mikroorganismen aus dem Wasser durch Filtration abgeschieden.

Die Vorrichtung 1 kann alternativ oder zusätzlich auch zur Zugabe von Substanzen zur Bildung von Agglomeraten dienen und damit zur gezielten Abscheidung bestimmter Schadstoffe genutzt werden. Alternativ oder zusätzlich kann in Vorrichtung 1 auch eine Zugabe von Tracer-Molekülen stattfinden. Dabei wäre eine redundante Detektion dieser bei Membrandurchbruch in Element 3 möglich. Diese Moleküle können beispielsweise aus 0-wertigen Metall-Molekül-Agglomeraten bestehen.

Bei der Ultrafiltration können eingesetzte Membranen als Hohlfaser-, Platten- und/oder Wickelmembranen ausgebildet sein. Die Membranmaterialien können Kunststoffe, wie beispielsweise Polyethersulfon, umfassen oder Keramik, Sintermetalle, etc. In der Ultrafiltrationstechnologie wird konventionell der korrekte Betriebszustand der Produktionsanlage beziehungsweise der Membranen durch den sogenannten Integritätstest vor und, wenn gewünscht, auch nach einem Produktionszyklus überprüft. Dabei wird mittels Druckluft, zum Beispiel Sterilluft, in einem festgelegten Druckbereich nach dem Prinzip des "Bubble-Point" Tests die Luftdurchlässigkeit der benetzten Membran bestimmt. Die überwachte, sich einstellende Druckdifferenz (Transmembrandruck) sowie deren Abnahme über ein festgelegtes charakteristisches Zeitintervall ist ein aussagefähiges Indiz für die Integrität bei der jeweils vorhandenen Porengröße der benetzten Membranen. Der Test reagiert sehr empfindlich auf defekte Membranen (Membranenbruch). Der Integritätstest fordert ein Auskoppeln der jeweils dem Integritätstest zu unterwerfenden Membraneinheit bei mehreren parallel arbeitenden Membraneinheiten. Der Integritätstest kann also nur im Produktionsstillstand (Stillstand der Membraneinheit) durchgeführt werden, meist in Verbindung mit einem vorhergehenden Rückspülzyklus und/oder einem Reinigungszyklus oder Sterilisationszyklus. Dies bedeutet, dass während des Produktionszyklus im Stand der Technik keine Möglichkeit gegeben ist, eine sich nach dem letzten Integritätstest einstellende Funktionsstörung festzustellen und dieser abzuhelfen oder eine Gegenmaßnahme einzuleiten.

In der beispielhaften Produktionsanlage in Figur 1 ist daher ein Sterilsensor 5 vorgesehen, der direkt am Produktstrom 9 automatisch die Sterilität überwacht und einen Sterilitätsnachweis erbringt, so dass bei Auftreten einer Funktionsstörung, die eine Kontamination mit sich zieht, sofort Gegenmaßnahmen eingeleitet werden können. Der Sterilsensor 5 misst dabei eine Konzentrationsabnahme eines für den Sterilitätsnachweis dem Produktstrom 9 zugegebenen Desinfektionsmittels. Ein derartiger Sensor ist auch aus der DE 10 2010 041 827.7 bekannt.

Das Desinfektionsmittel ist beispielsweise Ozon, obwohl auch Clohrdioxid, Wasserstoffperoxid, Singulett-Sauerstoff oder ähnliche Desinfektionsmittel einzeln oder in Kombination verwendet werden könnten. Das Ozon wird in diesem Beispiel durch eine Zugabevorrichtung 4 für das Desinfektionsmittel in den Produktstrom 9 eingebracht. Im Falle von Ozon kann beispielsweise ein Ozongenerator, der das erzeugte Desinfektionsmittel über einen Venturidüseninjektor oder eine Sonde oder dergleichen mit einer bestimmten Konzentration dem Produktstrom zugibt, vorgesehen sein. Im Falle von Ozon kann beispielsweise eine Konzentration von etwa 0,5 ppm bis 2,0 ppm verwendet werden, vorzugsweise 0,5 ppm bis 1,0 ppm.

Der Zweck des Desinfektionsmittels besteht hier nicht primär darin, Sterilität durch Abtöten von Mikroorganismen oder Keimen herzustellen, sondern eine Möglichkeit einer Onlinezustands-überwachung des produzierten sterilen Produktstroms während eines Produktionszyklus zu schaffen.

Im Fall eines Ultrafiltrationsmoduls kann die Sterilisationsvorrichtung 2 auch ein Rückspülsystem sowie eine Integritätstestvorrichtung umfassen. Die Sterilisationsvorrichtung 2, insbesondere ein Filtrationsmodul der Sterilisationsvorrichtung 2, kann insbesondere sanitisierbar oder sterilisierbar sein.

Obwohl das Desinfektionsmittel primär zur Zustandsüberwachung zugegeben und in seiner Konzentrationsabnahme gemessen wird, kann zusätzlich die desinfizierende Wirkung des zugegebenen Desinfektionsmittels genutzt werden, um im Falle einer nur minimalen Kontamination im Produktstrom den Herstellungsprozess fortzuführen, beispielsweise, wenn an einer einzelnen Membran ein kleiner Fehler eingetreten ist oder nur eventuell möglicher schwacher Bewuchs mitgerissen wurde. Die Desinfektionswirkung des Desinfektionsmittels kann diese geringe Belastung kompensieren.

Im Falle einer groben Kontamination verstärkt sich der Zerfall des Desinfektionsmittels, d. h. die Halbwertzeit beim Abbau der Ozonkonzentration nimmt ab. Der Sterilsensor 5 spricht darauf an und gibt beispielsweise Alarm oder veranlasst den Abbruch des Herstellungsverfahrens oder das Verwerfen des Produktstroms. Eine grobe Veränderung kann nämlich einen signifikanten Membranbruch oder Modulfehler oder auch ein sich lösendes, bisher nicht feststellbares Nest an Mikroorganismen oder Keimen bedeuten.

Im Fall von Ozon als Desinfektionsmittel zerfällt dieses gemäß seiner Halbwertzeit oder kann in einer zusätzlichen Einrichtung vernichtet oder abgeführt werden, so dass im Wesentlichen kein Ozonrückstand im hergestellten Getränkeprodukt verbleibt.

Im Hauptstrang des Produktstroms 9 kann außerdem ein optionales Element 3 vorgesehen sein. In diesem können beispielsweise einer oder mehrere der folgenden Schritte durchgeführt werden:
- eine zusätzliche Desinfektion mittels einer in Reihe geschalteten Desinfektionseinheit, beispielsweise eine UV-Einheit.
- Alternativ oder zusätzlich können hier weitere ggf. benötigte chemische Additive zur nachträglichen Wasserkonditionierung und/oder zusätzlichen Desinfektion zugegeben werden.
- Auch ist denkbar die zuvor angesprochenen Tracer-Moleküle, die durch Vorrichtung 1 zugefügt werden können, hier durch einen geeigneten Sensor zu detektieren. Diese Einheit kann alternativ oder redundant zum Online-Steril-Sensor 5 genutzt werden.

Element 12 ist ebenso optional und kann beispielsweise ein Restozonvernichter sein, der die Ozonkonzentration unter gesetzliche Grenzwerte minimiert. Er kann jedoch auch im Sinne der Minimierung des Oxidationspotentials von Restozon auf spätere Saft-, Sirup- und/oder AromaKomponenten wichtig sein.

Danach kann ein zusätzliches Element 13 eingefügt sein, das zur Wasserentgasung dient und dessen Aufgabe es ist, die Sauerstoffkonzentration zu minimieren und unter die für die Produktion benötigten Grenzwerte zu bringen. Alternativ oder zusätzlich kann ein Wasserentgaser auch in einem aseptischen Mischer integriert sein.

Der zweite in Figur 1 dargestellte Produktstrom 10 wird in einer zweiten Sterilisationsvorrichtung 7 sterilisiert. Dabei kann es sich beispielsweise um eine Sterilisation mittels Mikrowellen, Ultraschall, Hochfrequenzstrahlung und/oder Ultrafiltration handeln. Es ist jedoch auch denkbar, dass der zweite Produktstrom 10 thermisch, also durch Erhitzen, sterilisiert wird. Der sterilisierte zweite Produktstrom 10 wird danach in die Mischvorrichtung 6 geleitet, wo er mit dem ersten Produktstrom 9 vermischt wird, um das gewünschte Getränkeprodukt herzustellen.

Bei der Mischvorrichtung 6 handelt es sich in diesem Beispiel insbesondere um einen aseptischen Mischer. Dadurch kann die Sterilität des hergestellten Getränkeprodukts gesichert werden. Der Mischer kann ein duales Ventil sein oder aus mehreren Einzelstufen wie einem Predoser bestehen.

Zusätzlich zu den zwei Produktströmen 9 und 10 können auch noch weitere Produktströme vorgesehen sein. Ein dritter beispielhafter Produktstrom ist in Figur 1 als punktierte Linie dargestellt. In diesem Produktstrom kann insbesondere eine dritte Sterilisationsvorrichtung 11 vorgesehen sein. Der dritte sterilisierte Produktstrom kann dann entweder auch in die Mischvorrichtung 6 und/oder direkt in den Füller 8 geleitet werden. Letzteres kann beispielsweise im Fall von Aromen durchgeführt werden. Der sterilisierte dritte Produktstrom kann jedoch auch dem zweiten Produktstrom 10 zugeführt werden, insbesondere vor der zweiten Sterilisationsvorrichtung 7.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Verfahren zum Herstellen eines Getränkeprodukts umfassend ein Mischen von wenigstens zwei Produktströmen (9, 10), wobei wenigstens einer der wenigstens zwei Produktströme (9, 10) vor dem Mischen ohne Erhitzen sterilisiert wird.

2. Verfahren nach Anspruch 1, wobei das Mischen der wenigstens zwei Produktströme (9, 10) aseptisch durchgeführt wird.

3. Verfahren nach Anspruch 1 oder 2, wobei der wenigstens eine Produktstrom (9) mittels eines Membranfiltrationsmoduls und/oder mittels eines chemischen Desinfektionsmittels und/oder mittels elektromagnetischer Strahlung und/oder mittels Ultraschall sterilisiert wird.

4. Verfahren nach einem der vorangegangenen Ansprüche, wobei der wenigstens eine Produktstrom (9) ein Kaltwasserstrom ist.

5. Verfahren nach einem der vorangegangenen Ansprüche, wobei die Sterilität des wenigstens einen Produktstroms (9) mittels eines Sensors (5), insbesondere eines OnlineSensors, überwacht wird.

6. Verfahren nach Anspruch 5, wobei die Sterilität des wenigstens einen Produktstroms mit Hilfe des Sensors (5) vor dem Mischen der wenigstens zwei Produktströme (9, 10) überprüft wird.

7. Verfahren nach Anspruch 5 oder 6, wobei dem wenigstens einen Produktstrom (9), insbesondere laufend, ein Desinfektionsmittel zugegeben und direkt im Produktstrom (9) die Konzentrationsabnahme des Desinfektionsmittels ermittelt und ausgewertet wird.

8. Verfahren nach Anspruch 7, wobei der mit dem Desinfektionsmittel versetzte Produktstrom (9) durch eine Verweilzeitstrecke geführt wird, wobei die Desinfektionsmittel-Konzentrationen vor und nach der Verweilzeitstrecke gemessen wird, und/oder eine Desinfektionsmittel-Konzentrationsdifferenz ermittelt und ausgewertet wird, und insbesondere wobei das Herstellen des Getränkeprodukts entweder bei erbrachtem Sterilitätsnachweis fortgesetzt wird, oder wegen nichterbrachtem Sterilitätsnachweis die Zugabe-Konzentration erhöht wird, bis der Sterilitätsnachweis erbringbar ist, oder wegen nicht erbringbarem Sterilitätsnachweis abgebrochen wird.

9. Produktionsanlage zum Herstellen eines Getränkeprodukts, umfassend:
eine Mischvorrichtung (6) zum Mischen von wenigstens zwei Produktströmen (9, 10); und
eine Sterilisationsvorrichtung (2) zum erhitzungsfreien Sterilisieren wenigstens eines der wenigstens zwei Produktströme (9, 10).

10. Produktionsanlage nach Anspruch 9, wobei die Sterilisationsvorrichtung (2) wenigstens ein Membranfiltrationsmodul umfasst.

11. Produktionsanlage nach Anspruch 9 oder 10, außerdem umfassend einen Sensor (5) zur Überwachung der Sterilität des wenigstens einen Produktstroms (9), insbesondere wobei mit dem Sensor (5) permanent eine Konzentrationsabnahme eines dem Produktstrom (9) zugesetzten Desinfektionsmittels messbar und im Hinblick auf Erbringen eines Sterilitätsnachweises auswertbar ist.

12. Produktionsanlage nach Anspruch 11, wobei für den wenigstens einen Produktstrom (9) bei dem Sensor (5) eine Verweilzeitstrecke vorgesehen ist, und im Bereich des Beginns der Verweilzeitstrecke eine Zugabevorrichtung (4) für das Desinfektionsmittel, insbesondere Ozon, Chlordioxid, Wasserstoffperoxid oder Singulett-Sauerstoff vorgesehen ist, und wobei der Sensor (5) einen Desinfektionsmittel-Endkonzentrationssensor stromab der Verweilzeitstrecke umfasst.
